Europäisches Patentamt

European Patent Office

Office européen des brevets

(19)

(11) Publication number: **0 352 833**
**A2**

# EUROPEAN PATENT APPLICATION

(21) Application number: **89201654.4**

(22) Date of filing: **23.06.89**

(51) Int. Cl.4: **F16L 3/22**

(30) Priority: **29.06.88 NL 8801649**

(43) Date of publication of application:
**31.01.90 Bulletin 90/05**

(84) Designated Contracting States:
**DE FR GB NL SE**

(71) Applicant: **APT NEDERLAND B.V.**
**Larenseweg 50**
**NL-1200 BD Hilversum(NL)**
(84) **NL**

Applicant: **AT&T NETWORK SYSTEMS**
**INTERNATIONAL B.V.**
**Larenseweg 50**
**NL-1200 BD Hilversum(NL)**
(84) **DE FR GB SE**

(72) Inventor: **Henzen, Theodorus Wilhelmus**
**Hendrikus**
**c/o INT. OCTROOIBUREAU B.V. Prof.**
**Holstlaan 6**
**NL-5566 AA Eindhoven(NL)**

(74) Representative: **De Jongh, Cornelis**
**Dominicus et al**
**INTERNATIONAAL OCTROOIBUREAU B.V.**
**Prof. Holstlaan 6**
**NL-5656 AA Eindhoven(NL)**

(54) Clamping device for maintaining tubular elements in clamping fit.

(57) A clamping device comprises two rigid hold-down means 1-1 and 1-2 for realising an assembly of at least one row of tubular elements in clamping fit. The clamping device comprises at least a single resilient hold-down means which is realised in the form of an elastic strip 3.

A maximum of two rows of tubular elements directly contiguous to each other can be clamped between a resilient hold-down means and a rigid hold-down means. However, between two resilient hold-down means it is possible to clamp a maximum of three rows of tubular elements directly contiguous to each other.

The zig-zag period of a strip 3 must not be more than twice the period of an engaging row of tubular elements.

This clamping device is also highly suitable for realising an assembly of coaxial conductors in clamping fit.

FIG.1

## Clamping device for maintaining tubular elements in clamping fit

The invention relates to a clamping device for realising an assembly of tubular elements having nominally equal diameters in clamping fit, in which device the tubular elements are combined to an assembly of at least one row of tubular elements and this assembly being clamped between two rigid means.

Such a device is known from the French Patent Application No. 2 475 651.

A clamping device of the above type can be used for finish-mounting tubular elements such as coaxial conductors, but can also be used, for example, for securing a group of tubular elements extending over a large section at various locations along this section.

When realising an assembly of tubular elements it is endeavoured to simultaneously clamp these elements in one operation. A possibility for achieving this object is to stack a collection of tubular elements without intervening elements and to clamp this stack as a whole. However, the problem may arise that as a result of unavoidable mutual differences in diameter, which may be caused by manufacturing tolerances, one or a plurality of tubular elements are no longer clamped.

Another possibility for simultaneous clamping of tubular elements is provided by the above-mentioned French Patent Application.

This known clamping device comprises rigid means between which the tubular elements are clamped.

The means have at least on one side a row of semi-circular recesses. These means are stacked so that circular recesses develop in which the tubular elements are clamped.

If the means comprise a row of semi-circular recesses on either side, these recesses form each other's image and these two rows of semi-circular recesses are separated by a reinforcing plate which forms part of the means.

Since this known clamping device comprises rigid components, the problem will arise that when creep occurs of any surface layer of a tubular element, this element is no longer under a defined pressure or may even come loose.

It is an object of the invention to provide a clamping device for realising an assembly of tubular elements in clamping fit in a single operation with a defined pressure per tubular element and which is able to maintain this defined pressure on each tubular element in case there are subsequently occurring variations in diameter, for example due to creep of any surface layer of the tubular elements and in case ther are slight diameter variations between these elements.

Thereto, according to a first aspect of the invention, the clamping device is characterized in that it comprises at least one resilient means stretching out along the rows and contiguous to them, and in that each time in this clamping device no more than two mutually contiguous rows are clamped between two means, no less than one of these means being a resilient means that is designed as a zig-zag formed elastic strip whose zig-zag period is no more than twice as large as that of the contiguous row of tubular elements.

According to another aspect of the invention the clamping device is characterized in that it comprises three mutually contiguous rows clamped between two zig-zag formed elastic strips, whose zig-zag period is equal to that of the contiguous row of tubular elements.

When implementing the measures according to the invention it is achieved that the tubular elements are maintained under a well-defined and virtually constant pressure. The use of an elastic strip as a means produces the effect that the differences between the diameters of the tubular elements are compensated for because the elastic strip accommodates itself to the shape of a tubular element. This happens when in the course of time the diameter of a tubular element changes.

An additional advantage of the clamping device according to the invention is that a limited number of tubular elements can be removed from the stack without the remaining tubular elements coming loose. The removal of tubular elements from the stack may be required, for example, in the case of maintenance-repair jobs. In that case the pressure is sufficiently large to guarantee that the remaining tubular elements continue to be clamped.

Another additional advantage is space economy. The distance between two adjacent rows of tubular elements in a clamping device according to the state of the art is determined by the width of the reinforcing plate ina means, which plate separates the two rows of semi-circular recesses. In the clamping device according to the invention the distance between two adjacent tubular elements is basically formed by the thickness of the elastic strip. The thickness of the elastic strip will generally be smaller than the width of the reinforcing plate so that space economy may be obtained.

The clamping device according to the invention is specifically suitable for clamping coaxial conductors. A system in which a clamping device according to the invention is used for mounting in clamping fit an assembly of coaxial conductors is characterized in that these coaxial conductors have a braid and a rigid inside ring lying contiguous to the inner side of the braid.

The braid is used for screening electro-magnetic interference. For this purpose the braid is to have a permanently low earth resistance. By stretching the elastic strip when clamping coaxial conductors, a well-defined clamping pressure on the coaxial conductors is achieved. This guarantees a permanently low earth resistance.

The invention and its advantages will now be further explained with the aid of embodiments with reference to the drawings in which corresponding elements of the clamping device are represented by the same references in the drawings. The tubular elements are represented as tubes. Herein:

Figure 1: shows an embodiment of the clamping device according to a first aspect of the invention;

Figure 2: shows an embodiment of the realisation of an assembly of one row of tubes on clamping fit between a rigid means and an elastic strip;

Figure 3: shows an embodiment of the realisation of an assembly of two rows of tubes in clamping fit stacked directly on top of each other between a rigid means and an elastic strip;

Figure 4: shows an embodiment of the realisation of an assembly of two rows of tubes in clamping fit stacked directly on top of each other between two elastic strips;

Figure 5: shows an embodiment of the realisation of an assembly of one row of tubes in clamping fit between two elastic strips with a zig-zag period that is twice as large as the zig-zag period of the tubes;

Figure 6: shows an embodiment of the realisation of an assembly of three rows of tubes in clamping fit stacked directly on top of each other between two elastic strips;

Figure 7: shows an elastic strip in a pressed position;

Figure 8: shows a longitudinal section of a tube that is designed as a coaxial conductor;

Figure 9: shows a cross-section of the same coaxial conductor along line IX-IX in Figure 8.

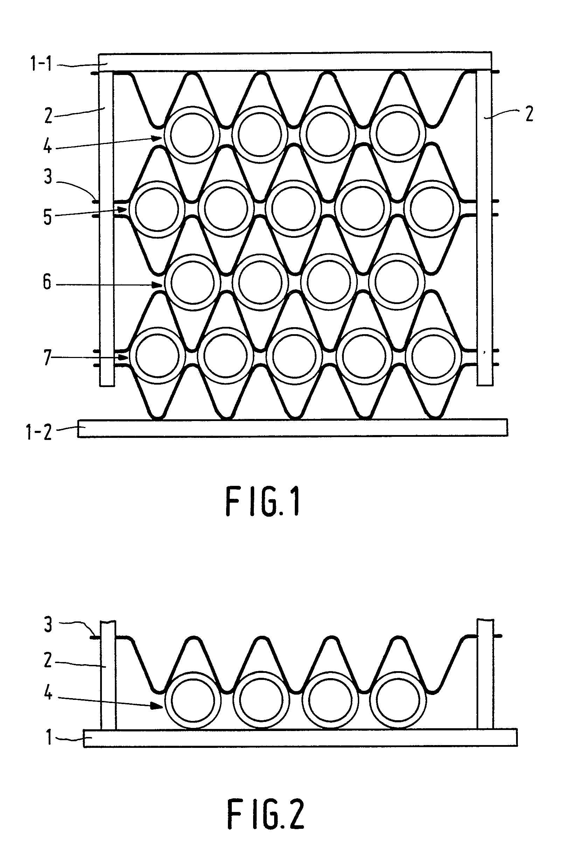

An embodiment of the clamping device according to the invention is given in Figure 1.

This clamping device comprises two rigid plates 1-1 and 1-2 for realising an assembly of four rows of tubes 4, 5, 6 and 7 in clamping fit, lying side by side, which assembly is surrounded on either side by two side walls 2 of the clamping device. In this embodiment of the clamping device no more than one row of tubes lying side by side is clamped between two elastic strips 3 extending from the side walls, which strips are represented undeformed for clarity. The elastic strips 3 have a zig-zag form which is used to exert a defined clamping pressure on the tubes. For obtaining sufficient clamping pressure the strips can be made of metal.

The ends of the strips 3 run parallel to the plates 1-1 and 1-2 and pass through recesses in the side walls.

The side walls 2 can, for example, be made of metal to realise a robust support of the tubes or, for example, plastic in case less strict requirements are made on the robustness of the support.

By exerting a pressure at right angles to the plate 1-2 in the direction of plate 1-1, an assembly of tubes is pressed against plate 1-1 and clamped. During this operation the strips 3 wil be subjected to a slight deformation in the direction in which the pressure is exerted. The recesses in the side walls 2 are made sufficiently large so that they are not jammed in these recesses when the zig-zag formed top-ends of the strips 3 move in the direction in which the pressure is exerted.

When the rows of tubes 4, 5, 6 and 7 are clamped, the strips 3 will be deformed following the contour of the surface of the tubes. The clamping pressure introduced by the hold-down plates 1-1 and 1-2 is uniformly transferred to the tubes in this manner. Because the strips 3 have accommodated to the shape of the tubes, creep of any surface layer does no longer affect the clamping pressure which is exerted on these tubes. Also the clamping pressure on the tubes can be maintained when slight diameter variations occur between these tubes. The deformability of the strips 3 can easily compensate for these slight diameter variations.

The two above-mentioned advantages are discussed with reference to Figure 1 in which only a single row of tubes is clamped between two hold-down means which are both realised as elastic strips 3.

These two advantages are also achieved when the tubes are clamped according to the embodiments shown in the Figures 2, 3, 4, 5, 6 and 7. In the figures 2, 3, 4, 5 and 6, just like in Figure 1, the elastic strips 3 are shown undeformed.

For simplicity, only one assembly of no more than two rows 4 and 5 of tubes are shown in Figures 2, 3, 4 and 5. This assembly forms part of the stack of tubes that is clamped in a manner as shown in Figure 1.

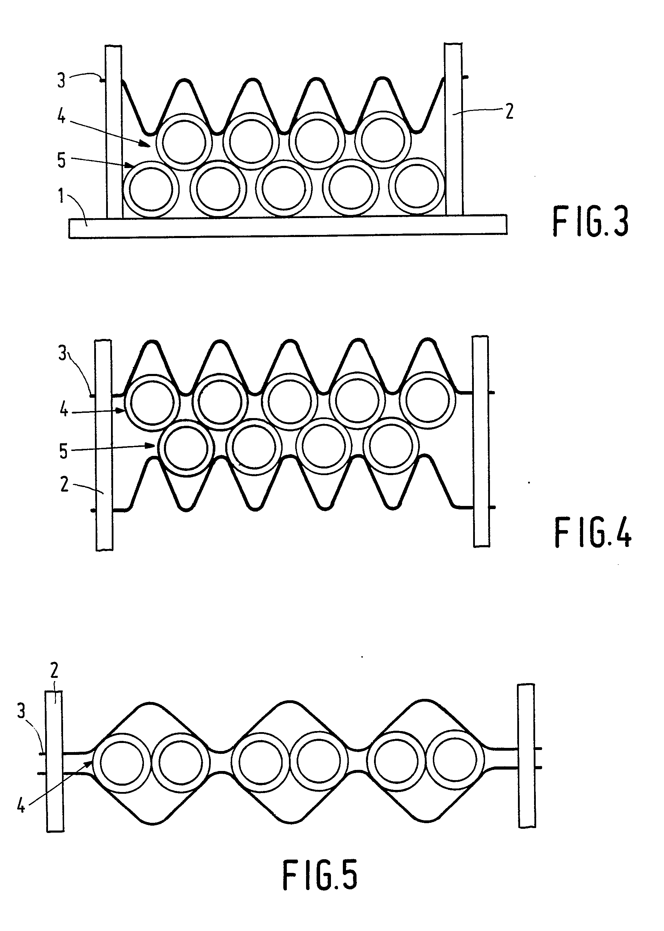

In Figure 2 one row 4 of tubes is clamped between an elastic strip 3 and a rigid hold-down plate 1. In another embodiment, which is shown in Figure 3, two rows 4 and 5 of tubes are clamped between an elastic strip 3 and a rigid hold-down plate 1.

If more than two rows of tubes are clamped between an elastic strip 3 and a hold-down means, there are tubes that do not make contact with one of the hold-down means. If mutual diameter variations occur between these tubes, they are not subjected to a single defined pressure and are not clamped properly.

The embodiment which is shown in Figure 4 is a variant of the Figures 2 and 3. In this Figure 4 an embodient is shown in which two rows 4 and 5 of tubes are clamped between two elastic strips 3.

In the embodiments of the clamping device according to the invention which is shown in Figures 1, 2, 3 and 4, the zig-zag period of an elastic strip 3 is equal to the zig-zag period of an engaging row of tubes. Figure 5 shows an embodiment in which one row 4 of tubes is clamped between two elastic strips 3 of which the zig-zag period is twice as large as the zig-zag period of the row 4 of tubes. If the zig-zag period of the elastic strips 3 is larger than twice the zig- zag period of a row of tubes it is possible that there are tubes that are not subjected to contact pressure so that these tubes are clamped in an undefined manner. In the embodiments of the Figures 1, 2, 3, 4 and 5 the zig-zag period of the elastic strips 3 is therefore restricted to no more than twice the zig-zag period of a row of tubes. In the embodiment of Figure 5 each tube from the row 4 of tubes makes good contact with an elastic strip 3 so that a defined clamping pressure remains guaranteed.

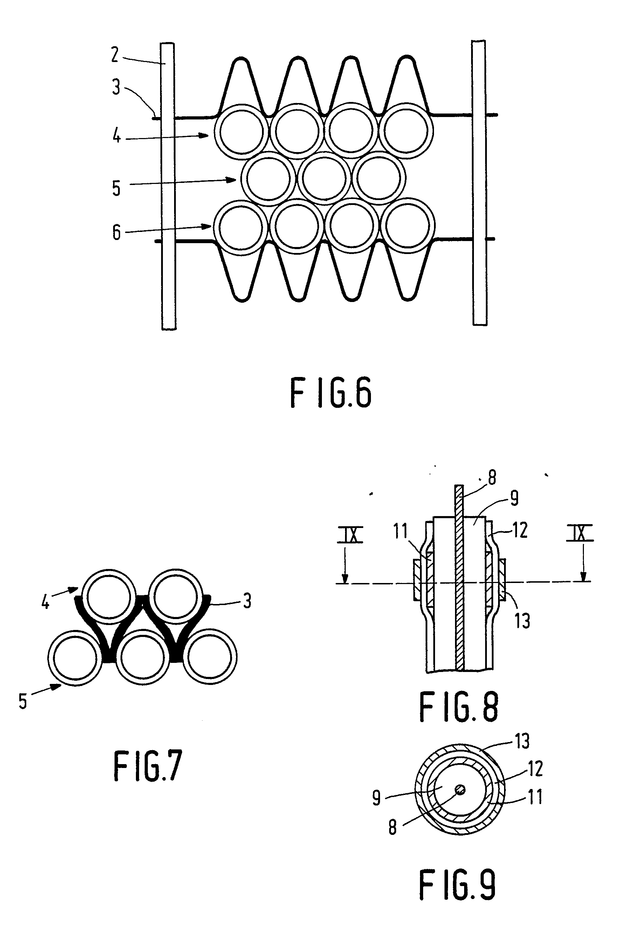

In Figure 6 three rows of tubes 4, 5 and 6 are clamped between two elastic strips 3. As in the Figures 2, 3, 4 and 5 only an assembly of three rows of tubes 4, 5 and 6 is shown in Figure 6 for simplicity. This assembly forms part of a stack of tubes that is clamped in a manner shown in Figure 1.

The strips 3 engage the rows of tubes 4 and 6 and can exert pressure on the tubes in the rows 4 and 6. When diameter variations occur between the tubes, for example in row 5, the tubes are clamped by both strips 3. The clamping pressure on the rows of tubes 4 and 6 is thus transferred to the row of tubes 5 and the rows 4, 5 and 6 thus receive a lasting and well-defined clamping pressure.

Finally, in Figure 7 an view is shown of an elastic strip 3 in a hold-down position. The elastic strip 3 is deformed by the clamping pressure so that it has the maximum contact with the tubes in the rows 4 and 5.

The embodiments of the clamping device according to the invention shown in the Figures 1, 2, 3, 4, 5, 6 and 7 are particularly suitable for realising an assembly of coaxial conductors in clamping fit. Figure 8 shows a longitudinal section and Figure 9 a cross-section of a coaxial conductor according to the invention.

The coaxial conductor comprises a core 8 of conducting material, such as copper, which is enveloped in material 9 that maintains the core at a specific distance from the braid. Around this material 9 there is a braid 12 of woven metal wire and in between the material 9 and the braid 12 there is a rigid ring 11 of, for example, aluminium on the inside of the braid 12. The ring 11 makes the braid 12 assume the shape of the pipe as long as the braid 12 makes contact in clamping fit with the rigid ring 11. This contact pressure is obtained by introducing on the outside of the braid 12 a ring 13 of metal in clamping fit around the ring 11.

This achieves a coaxial conductor functioning as an undeformable tube. For realising a good galvanic contact the elastic strips 3 are suitably made of metal.

## Claims

1. A clamping device for realising an assembly of tubular elements having nominally equal diameters in clamping fit, in which device the tubular elements are combined to an assembly of at least one row of tubular elements lying side by side and this assembly being clamped between two rigid hold-down means, characterized in that the clamping device comprises at least one resilient hold-down means stretching out along the rows and contiguous to them, and in that in this clamping device no more than two mutually engaging rows are clamped between two hold-down means each time, no less than one of these hold-down means being a resilient hold-down means that is designed as a zig-zag formed elastic strip whose zig-zag period is no more than twice as large as that of the contiguous row of tubular elements.

2. A clamping device for realising an assembly of tubular elements having nominally equal diameters in clamping fit, in which device the tubular elements are combined to an assembly of at least one row of tubular elements lying side by side and this assembly being clamped between two rigid hold-down means, characterized in that in this clamping device three mutually contiguous rows are clamped between two zig-zag formed elastic strips, whose zig-zag period is equal to that of the contiguous row of tubular elements.

3. A system for realising an assembly of coaxial conductors in clamping fit, comprising a device as claimed in Claim 1 or 2 and tubular elements that are realised as coaxial conductors, characterized in that these coaxial conductors have a braid and a rigid inside ring lying contiguous to the inner side of the braid.

4. A system as claimed in Claim 3, characterized in that an outside ring is clamped around the braid at the location of the inside ring.

FIG.1

FIG.2

FIG.3

FIG.4

FIG.5

FIG.6

FIG.7

FIG.8

FIG.9